# FASCICULE DE BREVET EUROPEEN

(11) **EP 1 350 649 B1**
(45) Date de publication et mention de la délivrance du brevet: **18.05.2005**
(21) Numéro de dépôt: 03290519.2
(22) Date de dépôt: 04.03.2003
(51) Int. Cl.: B60K 5/12

(54) **Ensemble de suspension d'un groupe motopropulseur dans une caisse de véhicule automobile**
Aufhängung einer Antriebsgruppe in einer Karosserie eines Kraftfahrzeugs
Mounting of a drive unit in a motor vehicle body

(30) Priorité: 26.03.2002 FR 0203781
(43) Date de publication de la demande: 08.10.2003
(73) Titulaire: Peugeot Citroen Automobiles SA, 78943 Vélizy-Villacoublay Cedex (FR)
(72) Inventeur: Kreis, Adrien, 24200 Montbeliard (FR); Malabat, Denis, 78000 Versailles (FR)
(74) Mandataire: Lanceplaine, Jean-Claude

(56) Documents cités:
- EP-A- 0 344 415
- DE-A- 3 202 256
- DE-A- 19 710 091
- FR-A- 2 640 554
- US-A- 4 487 287

## Description

La présente invention concerne un ensemble de suspension d'un groupe motopropulseur dans une caisse de véhicule automobile ainsi qu'un véhicule automobile équipé d'un tel ensemble de suspension du groupe motopropulseur.

De façon générale, le groupe motopropulseur d'un véhicule automobile est lié mécaniquement à la caisse de ce véhicule par un ensemble de suspension constitué de plusieurs éléments de fixation antivibratoires implantés d'une certaine manière entre le groupe motopropulseur et la caisse en fonction du type de motorisation, essence ou diesel, du cycle du groupe motopropulseur, du nombre de cylindres et de l'implantation transversale ou longitudinale de ce groupe motopropulseur dans la caisse.

Chacun des éléments de fixation antivibratoire est constitué d'une ou d'un assemblage de pièces en élastomère et de pièces métalliques permettant de lier la pièce ou l'assemblage de pièces en élastomère, d'une part, au groupe motopropulseur et, d'autre part, à la caisse du véhicule automobile.

Le principal rôle de la suspension du groupe motopropulseur est le maintien de ce groupe motopropulseur dans la caisse du véhicule automobile, notamment sous le poids propre dudit groupe motopropulseur et sous le couple de réaction exercé par les transmissions transversales sur le groupe motopropulseur lorsqu'il y a transmission de puissance du groupe motopropulseur vers les roues du véhicule.

La suspension du groupe motopropulseur doit néanmoins être suffisamment souple pour filtrer au mieux les vibrations liées à son fonctionnement et les transmettre le moins possible à la caisse du véhicule.

La grande souplesse des éléments de fixation antivibratoires par rapport au groupe motopropulseur et aux supports métalliques, entraîne l'existence de modes de suspension de ce groupe motopropulseur, placés très bas en fréquence.

Ces modes de suspension sont au nombre de six, trois en translation et trois en rotation dans un repère orthonormé XYZ et ils sont couramment appelés :
- mode de Tamis - translation selon X
- mode de Ballant - translation selon Y
- mode de Hachis - translation selon Z
- mode de Galop - rotation autour de X
- mode de Roulis - rotation autour de Y
- mode de Lacet - rotation autour de Z.

Le placement en fréquence de chacun de ces modes est réglé de façon très précise.

Plus particulièrement, les modes de Hachis et de Roulis jouent un rôle important vis à vis de la réponse du groupe motopropulseur sur sa suspension aux différentes excitations mécaniques qui le sollicitent.

On connaît plusieurs types d'ensemble de suspension des groupes motopropulseurs, dont les deux plus courants sont la suspension dite pendulée, pour les groupes motopropulseurs implantés transversalement et la suspension dite posée pour les groupes motopropulseurs implantés longitudinalement ou transversalement.

La suspension dite pendulée est particulièrement bien adaptée aux groupes moto-propulseurs implantés transversalement, elle est composée de trois éléments de fixation antivibratoires dont deux sont placés au-dessus du centre de gravité du groupe motopropulseur et dont le troisième est situé plus bas que le centre de gravité de ce groupe motopropulseur.

Les deux premiers éléments assurent une fonction de portage et de positionnement vertical du groupe motopropulseur dans la caisse du véhicule tandis que le troisième élément disposé au-dessous du centre de gravité n'est pas porteur et ne nécessite donc pas un niveau de raideur conséquent dans la direction verticale selon l'axe Z.

Chacun des trois éléments assure une fonction de reprise de couple et de limitation des rotations du groupe motopropulseur sous couple, ce qui a pour conséquence pour chacun de ces éléments de présenter un niveau de raideur élevé dans la direction X et implique la présence d'éléments de limitation dans cette même direction X, généralement cette fonction de limitation étant assurée par des butées en élastomère.

L'architecture de suspension du groupe motopropulseur dite pendulée, présente l'avantage de permettre un réglage indépendant des fréquences des modes de Hachis et de Roulis, par contre, la fréquence du mode de Galop est résultante.

La fréquence du mode de Lacet est également résultante si le troisième élément de suspension n'est pas placé à une cote selon la direction Y proche de celle du centre de gravité du groupe motopropulseur comme dans le document US-A-4 487 287.

Le document EP-A-0 344 415 décrit un ensemble de suspension d'un groupe motopropulseur dans une caisse de véhicule automobile au moyen d'éléments de fixation antivibratoires, un élément porteur du groupe motopropulseur et un élément non-porteur étant reliés chacun au groupe motopropulseur en un point situé au-dessus du centre de gravité du groupe motopropulseur et un troisième élément porteur étant relié à ce groupe motopropulseur en un point situé au-dessous dudit groupe motopropulseur et sensiblement à l'aplomb du centre de gravité.

La non maîtrise des fréquences des modes de Galop et de Lacet peut être pénalisante dans le cadre de motorisation présentant des excitations en Galop et en Lacet, comme les motorisations trois cylindres en ligne ou les six cylindres disposés en V. Dans le cas particulier des motorisations trois cylindres en ligne le traitement de l'excitation en Galop et en Lacet passe généralement par l'adjonction d'un arbre d'équilibrage. Cette solution présente l'inconvénient d'être coûteuse et génère une surconsommation de carburant.

L'invention a pour but d'éviter ces inconvénients en proposant un ensemble de suspension facile à mettre en oeuvre et économique et qui permet de caler les six modes de suspension du groupe motopropulseur pratiquement indépendamment les uns des autres et à des fréquences relativement basses.

L'invention a donc pour objet un ensemble de suspension d'un groupe motopropulseur dans une caisse de véhicule automobile au moyen d'éléments de fixation antivibratoires, dans lequel les éléments de fixation sont des éléments porteurs du groupe motopropulseur, deux de ces éléments étant reliés chacun au groupe motopropulseur en un point situé au-dessus du centre de gravité du groupe motopropulseur et un desdits éléments étant relié à ce groupe motopropulseur en un point situé au-dessous dudit groupe motopropulseur et sensiblement à l'aplomb du centre de gravité.

Selon une autre caractéristique de l'invention, les trois éléments de fixation antivibratoires sont placés dans un même plan vertical contenant le centre de gravité du groupe motopropulseur.

Selon encore une autre caractéristique de l'invention, les éléments de fixation situés au-dessus du centre de gravité du groupe motopropulseur sont placés chacun de part et d'autre dudit groupe.

L'invention a également pour objet un véhicule automobile, caractérisé en ce qu'il comprend un ensemble de suspension du groupe motopropulseur tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un ensemble de suspension d'un groupe motopropulseur, conforme à l'invention,
- la Fig. 2 est une vue schématique de dessus du groupe motopropulseur représenté à la Fig. 1.

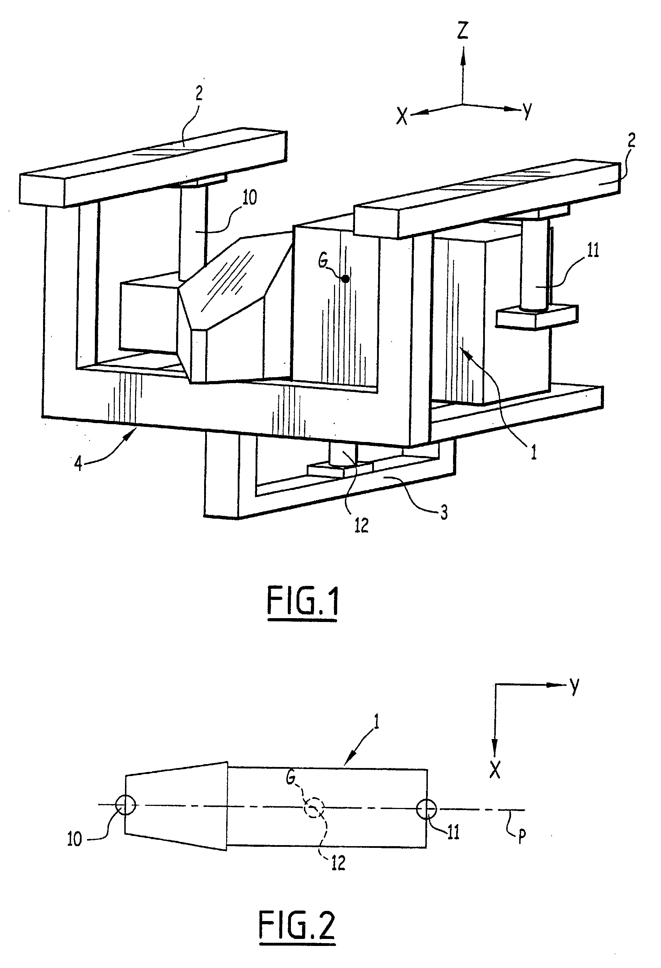

Sur la Fig. 1, on a représenté schématiquement un groupe motopropulseur désigné par la référence générale 1 supporté par deux brancards 2 s'étendant parallèlement à l'axe longitudinal du véhicule automobile et par une traverse 3 qui est elle-même accrochée à un berceau 4 solidaire des brancards 2.

De manière classique, les brancards 2 sont reliés à la caisse, non représentée, du véhicule automobile.

Le groupe motopropulseur 1 est supporté par les brancards 2 et la traverse 3 au moyen de trois éléments de fixation antivibratoires ou encore appelés éléments filtrant qui sont désignés respectivement par les références 10, 11 et 12.

Ces éléments de fixation antivibratoires 10, 11 et 12 ont été représentés schématiquement sur les figures et ils sont de type connu comprenant une pièce ou un assemblage de pièces en élastomère supporté par des pièces métalliques permettant de lier la ou les pièces en élastomère, d'une part, au groupe motopropulseur et, d'autre part, aux brancards 2 et à la traverse 3.

Les éléments de fixation 10, 11 et 12 de l'ensemble de suspension reprennent chacun une partie du poids du groupe motopropulseur 1 et sont donc porteurs.

Les éléments de fixation supérieurs 10 et 11 sont reliés chacun au groupe motopropulseur 1 en un point situé au-dessus du centre de gravité G de ce groupe motopropulseur 1 et solidarisent ledit groupe motopropulseur 1 à la caisse du véhicule automobile par l'intermédiaire des brancards 2. Les éléments de fixation antivibratoires 10 et 11 sont placés chacun de part et d'autre du groupe motopropulseur 1.

L'élément de fixation inférieur 12 qui est également un élément porteur est situé au-dessous et sensiblement à l'aplomb du centre de gravité G du groupe motopropulseur 1 et il assure la solidarisation de ce groupe motopropulseur 1 à la caisse du véhicule automobile par l'intermédiaire de la traverse 3 qui est elle-même accrochée au berceau 4.

De préférence et ainsi que représenté à la Fig. 2, les trois éléments de fixation 10, 11 et 12 sont placés dans un même plan vertical P contenant le centre de gravité G du groupe motopropulseur 1.

Dans un repère orthonormé XYZ, les raideurs en XYZ de l'élément de fixation inférieur 12, de par sa position par rapport au centre de gravité G du groupe motopropulseur 1, ne viennent pas perturber le calage des modes de rotation en Galop et en Lacet, qui ne sont alors définis que par la raideur des deux éléments de fixation supérieurs respectivement 10 et 11, et par la distance selon les axes X et Y les séparant.

Le mode de Roulis est quant à lui résultant des seules raideurs selon l'axe X des trois éléments de fixation 10, 11 et 12 ainsi que de la distance selon l'axe Z entre les éléments de fixation 10, 11 et 12 et le centre de gravité du groupe moto-propulseur.

Le mode de Hachis est, pour sa part, principalement défini par la raideur selon l'axe Z de l'élément de fixation inférieur 12 et dans une moindre mesure par les raideurs selon cet axe Z des deux éléments de fixation supérieurs 10 et 11, ces éléments de fixation supérieurs 10 et 11 étant avant tout définis pour caler le mode de Galop.

Les deux autres modes de translation Tamis et Ballant sont quant à eux résultant de la somme des raideurs selon les axes X et Y des éléments filtrants 10, 11 et 12.

Le mode de Ballant peut aussi être réglé en jouant sur les raideurs selon l'axe Y des éléments de fixation 10, 11, 12, qui interviennent peu sur les fréquences des autres modes.

L'ensemble de suspension selon l'invention permet de régler les fréquences des six modes de suspension du groupe motopropulseur quasiment indépendamment les uns des autres et notamment de placer ces six modes à des fréquences relativement basses.

Cet ensemble présente les mêmes avantages qu'un ensemble de suspension de type pendulé pour le découplage des modes de Roulis et Hachis, ainsi que pour le réglage indépendant de leurs fréquences. Il a l'avantage de permettre, de plus, le réglage indépendant des modes de Hachis et de Galop, ainsi que du mode de Roulis et de Lacet.

Le réglage indépendant des fréquences des modes de Hachis, Galop, Lacet et Roulis est particulièrement intéressant pour des motorisations de type trois cylindres en ligne qui présentent des excitations en mode de Galop et en Lacet à des fréquences inférieures à 20 Hertz. En effet, il est important alors de savoir placer les modes de Galop et de Lacet suffisamment bas en fréquence, tout en gardant un positionnement en fréquence classique pour les modes de Roulis et de Hachis.

De façon générale, l'ensemble de suspension conforme à l'invention convient parfaitement aux motorisations excitant le mode de Galop, et de Lacet comme les motorisations de type trois cylindres en ligne ou de type six cylindres en V.

Il convient également parfaitement aux motorisations qui excitent des fréquences inférieures à 20 Hertz, comme par exemple une motorisation ayant un régime de ralenti placé très bas, car il permet de placer tous les modes de suspension du groupe motopropulseur sous l'excitation la plus basse du groupe moto-propulseur.

## Revendications

1. Ensemble de suspension d'un groupe motopropulseur (1) dans une caisse de véhicule automobile au moyen d'éléments de fixation antivibratoires (10, 11, 12), dans lequel les éléments de fixation (10, 11, 12) sont des éléments porteurs du groupe motopropulseur (1), deux (10, 11) de ces éléments étant reliés chacun au groupe motopropulseur (1) en un point situé au-dessus du centre de gravité du groupe motopropulseur (1) et un (12) desdits éléments étant relié à ce groupe motopropulseur (1) en un point situé au-dessous dudit groupe motopropulseur et sensiblement à l'aplomb du centre de gravité.

2. Ensemble selon la revendication 1, **caractérisé en ce que** les trois éléments de fixation antivibratoires (10, 11, 12) sont placés dans un même plan sensiblement vertical contenant le centre de gravité du groupe motopropulseur (1).

3. Ensemble selon la revendication 1 ou 2, **caractérisé en ce que** les éléments de fixation antivibratoires (10, 11) sont placés chacun de part et d'autre du groupe motopropulseur (1).

4. Véhicule automobile, **caractérisé en ce qu'**il comprend un ensemble de suspension du groupe motopropulseur (1) selon l'une quelconque des revendications 1à 3.

## Patentansprüche

1. Konstruktion zum Aufhängen einer Motoranlage (1) in einem Kraftfahrzeug-Rahmen mittels Antivibrations-Befestigungselementen (10, 11, 12), in welcher die Befestigungselemente (10, 11, 12) tragende Elemente der Motoranlage (1) sind, wobei zwei (10, 11) von jenen Elementen jedes mit der Motoranlage (1) an einer Stelle verbunden sind, welche sich über dem Schwerpunkt der Motoranlage (1) befindet und wobei eines (12) der Elemente mit der Motoranlage (1) an einer Stelle verbunden ist, welche sich unter der Motoranlage und im Wesentlichen senkrecht zum Schwerpunkt befindet.

2. Konstruktion gemäß Anspruch 1, **dadurch gekennzeichnet, dass** die drei Antivibrations-Befestigungselemente (10, 11, 12) in der gleichen, im Wesentlichen vertikalen Ebenen angeordnet sind, welche den Schwerpunkt der Motoranlage (1) enthält.

3. Konstruktion gemäß Anspruch 1 oder 2, **dadurch gekennzeichnet, dass** die Antivibrations-Befestigungselemente (10, 11) auf beiden Seiten der Motoranlage (1) platziert sind.

4. Kraftfahrzeug, **dadurch gekennzeichnet, dass** es eine Konstruktion zum Aufhängen der Motoranlage (1) gemäß einem der Ansprüche 1 bis 3 aufweist.

## Claims

1. System for suspending an engine assembly (1) in a motor vehicle body by means of antivibration fixing members (10, 11, 12), wherein the fixing members (10, 11, 12) support the engine assembly (1), two of said members (10, 11) are each connected to the engine assembly (1) at a point above the centre of gravity of the engine assembly (1), and one of said members (12) is connected to said engine assembly (1) at a point below said engine assembly and substantially in vertical alignment with the centre of gravity.

2. System according to claim 1, **characterised in that** the three antivibration fixing members (10, 11, 12) are in a common substantially vertical plane containing the centre of gravity of the engine assembly (1).

3. System according to claim 1 or claim 2, **characterised in that** the antivibration fixing members (10, 11) are on respective opposite sides of the engine assembly (1).

4. Motor vehicle **characterised in that** it comprises a system according to any one of claims 1 to 3 for suspending the engine assembly (1).
